# EUROPÄISCHE PATENTSCHRIFT

(11) **EP 0 532 030 B1**
(45) Veröffentlichungstag und Bekanntmachung des Hinweises auf die Patenterteilung: **21.02.1996**
(21) Anmeldenummer: 92115581.8
(22) Anmeldetag: 11.09.1992
(51) Int. Cl.: F01N 3/02

(54) **Vorrichtung zum Entfernen von Partikeln aus Dieselmotorenabgas**
Device for removing particles out of the exhaust gases of diesel engines
Dispositif pour éliminer des particules des gaz d'échappement de moteurs diesel

(30) Priorität: 12.09.1991 DE 4130376
(43) Veröffentlichungstag der Anmeldung: 17.03.1993
(73) Patentinhaber: Firma J. Eberspächer, D-73730 Esslingen (DE)
(72) Erfinder: Langen, Herbert, D-7305 Altbach (DE)
(74) Vertreter: Klunker . Schmitt-Nilson . Hirsch

(56) Entgegenhaltungen:
- EP-A- 0 292 688
- DE-A- 3 410 716
- DE-A- 3 827 402
- DE-A- 3 828 248
- US-A- 4 383 411
- US-A- 4 567 725
- US-A- 4 615 173

## Beschreibung

Die Erfindung bezieht sich auf eine Vorrichtung zum Entfernen von Partikeln aus Dieselmotorenabgas, aufweisend:
(a) ein Gehäuse, in das eine von dem Dieselmotor kommende Abgasleitung seitlich einmündet und in dem ein Partikelfilter angeordnet ist, der bei seinem Betrieb von Motorabgas durchströmt wird;
(b) einen eine Brennkammer aufweisenden Brenner für Flüssigbrennstoff, der dem Filter derart zugeordnet ist, daß beim Betrieb des Brenners dessen heiße Verbrennungsgase den Filter durchströmen zum Abbrennen von ausgefilterten Partikeln;
(c) ein Gebläse zum Zuführen von Verbrennungsluft zu dem Brenner;
(d) einen stromaufseitigen, ersten Brennkammerabschnitt mit einem Stutzen, in dem eine elektrische Zündeinrichtung angeordnet ist und der mit Öffnungen zum Zuführen des Brennstoffs sowie eines Teil-Verbrennungsluftstroms versehen ist;
(e) und einen stromabseitigen, zweiten Brennkammerabschnitt mit einem Verbrennungsluft-Zuführstutzen, der an seiner Einmündung eine Ausrichtung mit Umfangskomponente hat,

Zur Zeit werden vielerorts Anstrengungen unternommen, Vorrichtungen zum Entfernen von Partikeln - häufig vereinfachend als Ruß oder Rußpartikel bezeichnet - aus Dieselmotorenabgas zu entwickeln. Während bisher nahezu bei allen Dieselmotoren die Abgase mitsamt der Partikel unbehandelt in die Umgebung abgegeben werden, strebt man jetzt - primär aus Umweltschutzgründen - an, die Partikel mindestens großenteils aus den Dieselmotorenabgasen abzufangen, ehe diese ins Freie geblasen werden. Zum Abfangen der Partikel sind in den Abgasleitungen installierte Partikelfilter ein geeignetes Mittel, wobei man heute in erster Linie an keramische Monolithfilter und Keramikgarn-Wickelfilter denkt.

Das größte Problem ist die Beseitigung der ausgefilterten Partikel. Da bei Kraftfahrzeugdieselmotoren die Filter bereits nach einer Fahrstrecke von höchstens einigen hundert Kilometern vollständig mit Partikeln beladen sind, ist ein Austauschen eines beladenen Filters jeweils gegen einen neuen Filter keine unter praktischen Gesichtspunkten realistische Möglichkeit. Infolgedessen konzentrieren sich die Bemühungen darauf, Möglichkeiten für ein Regenerieren beladener Dieselmotorenabgas-Partikelfilter zu finden. Die erfolgversprechendste Möglichkeit ist die thermische Regenerierung durch Abbrennen der im beladenen Filter ausgefilterten Partikel. Hierfür sind jedoch während der Regeneration im Bereich des Filters Temperaturen von mindestens etwa 600°C erforderlich. Derartige Temperaturen herrschen im Abgas bestenfalls bei Vollastbedingungen oder bei Lastzuständen des Dieselmotors relativ nahe bei Vollast, so daß dann, wenn der Filter regenerierungsbedürftig ist und Bedingungen dieser Art nicht herrschen, der Filter durch eine andere Wärmequelle auf die erforderliche Regenerierungstemperatur gebracht werden muß.

Eine Vorrichtung zum Entfernen von Partikeln aus Dieselmotorenabgas, aufweisend die im Anfangsabsatz angeführten Merkmale (a) bis (e), ist bekannt (US-A-4 383 411).

Der Erfindung liegt die Aufgabe zugrunde, eine Vorrichtung der eingangs genannten Art verfügbar zu machen, die bei einfachem Aufbau optimal auf die günstigsten Regenerierungsbedingungen steuerbar ist.

Zur Lösung dieser Aufgabe ist die Vorrichtung erfindungsgemäß dadurch gekennzeichnet
(f) daß eine Pumpe (46) zum Zuführen des Brennstoffs zu dem Brennervorgesehen ist;
(g) daß ein in einem großen Bereich des Brennstoff/Luftverhältnisses betreibbarer und allein durch Regelung der Brennstoffzufuhr in einem großen Bereich leistungsregelbarer Brenner vorgesehen ist,
(h) daß ein Temperaturfühler im Bereich des Filters zur Erfassung des Temperaturzustandes des Filters vorgesehen ist;
(i) daß eine elektrische Steuerung vorgesehen ist, an die der Temperaturfühler und die Brennstoffpumpe des Brenners angeschlossen sind, wobei die Steuerung so ausgelegt ist, daß in Abhängigkeit von dem erfaßten Temperaturzustand dem Brenner eine derartige Brennstoffmenge zugeführt wird, daß am Filter eine für das Abbrennen der ausgefilterten Partikel günstige Temperatur herrscht,
(k) daß zwischen dem ersten und dem zweiten Brennkammerabschnitt ein Unterteilungselement mit mindestens einer Durchströmöffnung vorgesehen ist;
(l) daß am stromabseitigen Ende des zweiten Brennkammerabschnitts ein Abschlußelement mit mindestens einer Durchströmöffnung vorgesehen ist;
(m) daß das Abschlußelement des zweiten Brennkammerabschnitts eine stirnseitige Abschlußwand des Partikelfiltergehäuses bildet;
(n) und daß die Abgasleitung seitlich in einen Raum in dem Gehäuse zwischen dem Abschlußelement und dem Partikelfilter einmündet.

Der Brenner ist also konstruktiv so ausgelegt, daß er allein durch Erhöhung oder Erniedrigung der Brennstoffzufuhr eine höhere oder eine niedrigere Wärmeleistung erbringt. Im Zusammenwirken mit dem derartigen Brenner kann die einfach ausgebildete, elektrische Steuerung den Filterregenerierungsvorgang so steuern bzw. regeln, daß am Filter eine günstige Partikelabbrenntemperatur herrscht. Diese Temperatur ist hoch genug, um ein Abbrennen der Partikel zu gewährleisten, aber nicht unnötig hoch, um Beschädigungen des Filters und unnötig hohen Energieeinsatz zu vermeiden.

Die im weiter vorne genannten Merkmal (g) enthaltene Angabe "allein durch Regelung der Brennstoffzufuhr in einem großen Bereich leistungsregelbarer Brenner" soll nicht ausschließen, daß der Brenner gewünschtenfalls auch noch zusätzlich beispielsweise durch Änderung der Gebläseleistung leistungsregelbar ist. Wichtig ist lediglich, daß der Brenner auch ohne Änderung der Gebläseleistung durch Änderung der Brennstoffzufuhr in einem wünschenswert großen Bereich hinsichtlich seiner Wärmeleistung änderbar ist.

Ein Brenner mit den weiter vorn angegebenen Merkmalen (d), (e), (g) und (k) ist an sich aus der DE-A-34 10 716 bekannt, allerdings nicht im Zusammenhang mit der Regenerierung von Dieselmotorenabgas-Partikelfiltern sondern ausschließlich im Zusammenhang mit Heizgeräten zur Wärmeerzeugung, insbesondere Fahrzeugheizgeräten, und im Zusammenhang mit Kochgeräten. Es ist in Weiterbildung der Erfindung bevorzugt, daß der Brenner einzelne oder mehrere der Merkmale aufweist, die in der DE-A-34 10 716 beschrieben sind. Der Gesamtinhalt dieser Druckschrift wird durch ausdrückliche Bezugnahme zum Bestandteil der Offenbarung der vorliegenden Anmeldung gemacht.

Es ist ein Charakteristikum des erfindungsgemäß vorgesehenen Brenners mit erstem Brennkammerabschnitt und zweitem Brennkammerabschnitt, daß sich bei niedriger Brennstoffzufuhr (niedriges Brennstoff/ Verbrennungsluft-Verhältnis) die Verbrennung des zugeführten Brennstoff weitgehend in dem ersten Brennkammerabschnitt konzentriert, während sie bei relativ großer Brennstoffzufuhr (hohes Brennstoff/ Verbrennungsluft-Verhältnis) sowohl im ersten Brennkammerabschnitt als auch im zweiten Brennkammerabschnitt stattfindet. Insbesondere bei höherer Brennstoffzufuhr kann es durchaus sein, daß sich die Verbrennung auch noch hinter dem Ende des zweiten Brennkammerabschnitts fortsetzt. Aufgrund seiner konstruktiven Ausbildung erlaubt der erfindungsgemäß eingesetzte Brenner einen stabilen Brennbetrieb nicht nur mit Luftüberschuß, sondern auch im wesentlichen rußfrei mit Luftmangel. Konkret haben Versuche einen möglichen Betriebsbereich von Lambda = 1:5 (hoher Luftüberschuß) bis Lambda=1:0,5 (erheblicher Luftmangel) ergeben, wobei Lambda=1:1 das stöchiometrische Brennstoff/Verbrennungsluft-Verhältnis bedeutet. Bei Lambda unter 1:1 enthalten die Verbrennungsgase des Brenners praktisch keinen Sauerstoff mehr. Der zum Abbrennen der im Filter ausgefilterten Partikel erforderliche Sauerstoff wird aus dem Motorabgas bezogen. Das ist deshalb möglich, weil Brennerbetrieb mit Luftmangel, also hohe Brennstoffzufuhr zum Brenner wegen erforderlicher hoher Wärmeleistung des Brenners, dann stattfindet, wenn sich der Partikelfilter aufgrund relativ niedriger Leistung des Dieselmotors ohne wesentliche Selbstregeneration besonders rasch zusetzt, aber demzufolge das Motorabgas relativ kalt und sauerstoffreich ist (Betrieb des Dieselmotors mit hohem Luftüberschuß).

Durch das Abschlußelement am stromabseitigen Ende des zweiten Brennkammerabschnitts ergibt sich ein Staueffekt, der in Richtung Zurückhalten der Verbrennung in dem zweiten Brennkammerabschnitt wirkt. Vorzugsweise erweitert sich die Durchströmöffnung des Abschlußelements in Stromabwärtsrichtung. Man kann durch Auslegen der Durchströmöffnung des Abschlußelements die Form des austretenden Verbrennungsgasstroms bzw. der austretenden Brennerflamme in einem gewünschten Sinn beeinflussen, insbesondere eine tellerartige bzw. schüsselartige Verbreiterung erreichen. Dies ist für eine großflächige Beaufschlagung der Eintrittsstirnseite des Filters günstig.

Die erfindungsgemäße Vorrichtung kann als Vollstrom-Regenerierungssystem ausgebildet sein, bei der während der brennerunterstützten Filterregenerierung die Verbrennungsgase des Brenners das Motorabgas auf die Regenerierungstemperatur aufheizen. Diese Ausbildung hat den Vorteil, besonders unkompliziert und unaufwendig zu sein. Andererseits muß hierfür eine relativ hohe Maximal-Brennerleistung installiert werden, weil der gesamte Motorabgasstrom auf die Regenerierungstemperatur aufgeheizt werden muß. Außerdem muß das Gebläse einen oberhalb des Motorabgasdrucks liegenden Verbrennungsgasdruck des Brenners sicherstellen. Auch bei der Vollstrom-Regenerierung wird normalerweise mit Filterregenerierung in Intervallen gearbeitet, d.h. es wird dann regeneriert, wenn der Filter vollständig oder nahezu vollständig beladen ist. Energetisch am günstigsten ist dann eine Regenerierung bei Stillstand des Dieselmotors, weil nur die Verbrennungsgase des Brenners die Regenerierungstemperatur haben müssen und nicht zusätzlich der große Motorabgasstrom mitaufgeheizt werden muß. In vielen Fällen wird man jedoch keine andere Wahl haben, als die Regenerierung bei im Betrieb befindlichem Dieselmotor vorzunehmen und die Vorrichtung entsprechend auszulegen.

Die erfindungsgemäße Vorrichtung kann auch als zweiflutiges Intervall-Regenerierungssystem ausgebildet sein, bei dem zwei parallelgeschaltete Filter und eine Klappe zum wahlweisen Leiten des Motorabgases in den ersten oder zweiten Filter vorgesehen sind und bei dem für jeden Filter ein eigener Brenner vorgesehen ist. Bei dieser Ausbildung wird dann, wenn einer der beiden Filter vollständig oder nahezu vollständig beladen ist, das Motorabgas mittels der Klappe zu dem anderen Filter geleitet und wird der erstgenannte Filter thermisch regeneriert. Wenn dann nach weiterer Betriebszeit der andere Filter vollständig oder nahezu vollständig beladen ist, wird umgekehrt vorgegangen.

Bei dem zweiflutigen System ist infolge der erfindungsgemäßen Ausbildung die Dichtigkeit der Klappe von untergeordneter Bedeutung. Selbst wenn infolge einer nicht ganz dichten Klappe Motorabgas dem gerade zu regenerierenden Filter zuströmt, wird durch die erfindungsgemäße Steuerung selbsttätig nach wie vor die erforderliche Regenerierungstemperatur eingehalten; lediglich ein erhöhter Brennstoffverbrauch bei der Regenerierung ist die Folge.

Es wird darauf hingewiesen, daß die Erfindung eine Anfangsphase der Filterregenerierung mit relativ hoher Wärmeleistung des Brenners erlaubt, damit die Regenerierung rasch in Gang kommt und die Gesamtzeit der Regenerierung verkürzt wird. Sobald sich der Brenner und der Filter auf Regenerierungstemperatur befinden, regelt die erfindungsgemäße Steuerung bzw. Regelung selbsttätig die Brennstoffzufuhr zu dem Brenner soweit zurück, daß die Temperatur am Filter nicht höher ist, als für die Regenerierung erforderlich.

Die erfindungsgemäße Vorrichtung ist in erster Linie für Antriebs-Dieselmotoren von Kraftfahrzeugen bestimmt.

Die Erfindung und Ausgestaltungen der Erfindung werden nachfolgend anhand von zeichnerisch dargestellten Ausführungsbeispielen noch näher erläutert. Es zeigt:
- Fig. 1: eine erste Ausführungsform einer thermisch regenerierbaren Partikelfilteranlage im Längsschnitt;
- Fig. 2: eine zweite Ausführungsform einer thermisch regenerierbaren Partikelfilteranlage im schematisierten Längsschnitt.

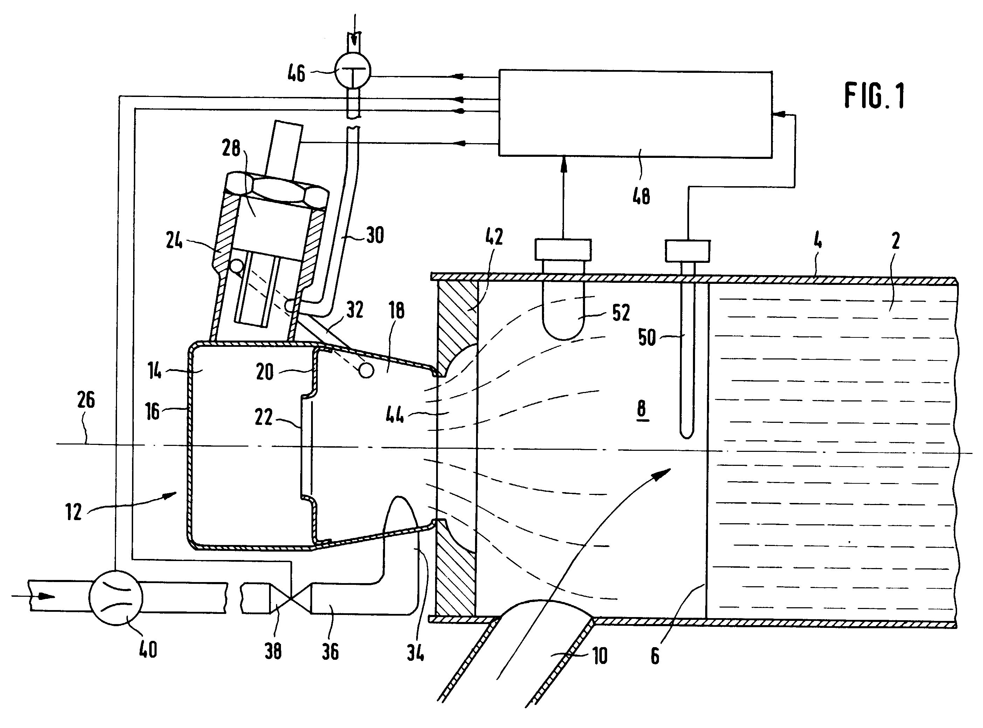

In Fig. 1 erkennt man einen Partikelfilter 2, der in einem beispielsweise zylindrischen Gehäuse 4 aus Stahlblech gehaltert ist. Vor der Eintritts-Stirnseite 6 des Filters 2 ist in dem Gehäuse 4 ein Raum 8 vorhanden, in den eine von einem nicht eingezeichneten Dieselmotor kommende Abgasleitung 10 einmündet. An das nicht eingezeichnete, in Fig. 1 rechte Ende des Gehäuses 4 ist hinter der austrittsseitigen Stirnseite des Filters 2 eine weiterführende Abgasleitung angeschlossen.

An die in Fig. 1 linke Stirnseite des Gehäuses 4 ist ein Brenner 12 koaxial angebaut. Der Brenner 12 besteht im wesentlichen aus einer Tandem-Brennkammeranordnung und weist Einrichtungen zum Zuführen von Verbrennungsluft sowie Flüssigbrennstoff, im vorliegenden Fall Dieselkraftstoff, sowie eine elektrische Zündeinrichtung auf.

Konkret hat man einen im wesentlichen zylindrischen, ersten Brennkammerabschnitt 14 mit geschlossenem, in Fig. 1 linken Boden 16 und einen sich von links nach rechts in Fig. 1 leicht verjüngenden, im wesentlichen kegelstumpfförmigen, fluchtend anschließenden, zweiten Brennkammerabschnitt 18. Der erste Brennkammerabschnitt 14 und der zweite Brennkammerabschnitt 18 sind durch ein Unterteilungselement 20 in Form einer Querwand mit einer zentralen Durchströmöffnung 22 voneinander abgegrenzt. Der Durchmesser der Durchströmöffnung 22 ist beim gezeichneten Ausführungsbeispiel etwa halb so groß wie der Durchmesser des ersten Brennkammerabschnitts 14.

Der erste Brennkammerabschnitt 14 weist einen Stutzen 24 auf, dessen Längsachse in der Zeichnungsebene der Fig. 1 gegenüber der Längsachse 26 der Brenner-Filter-Anordnung leicht schräggestellt ist. In den Stutzen 24 ist eine elektrische Zündeinrichtung, vorliegend eine Glühkerze 28, eingeschraubt, derart, daß die Glühwendel der Glühkerze 28 sich innerhalb des Stutzens 24 befindet. Im Bereich der Glühwendel mündet eine Brennstoffleitung 30 durch die Stutzenwand. Ferner gibt es ein relativ dünnes Rohr 32 zur Zuführung von Verbrennungsluft zu dem Inneren des Stutzens 24. Dieses Rohr 32 geht vom Umfang des zweiten Brennkammerabschnitts 18 aus und mündet im brennkammerentfernten Endbereich des Innenraums des Stutzens 24.

Der zweite Brennkammerabschnitt 18 weist einen Verbrennungsluft-Zuführstutzen 34 auf, der beim gezeichneten Ausführungsbeispiel tangential in die Brennkammerwand einmündet. Die Einmündung muß nicht exakt tangential sein. Sie soll aber mit Komponente in Umfangsrichtung der Brennkammerwand sein, damit sich in dem zweiten Brennkammerabschnitt 18 eine im wesentlichen schraubenlinienförmige Rotationsströmung in Richtung zum ersten Brennkammerabschnitt 14 ergibt. Über eine Verbrennungsluft-Leitung 36, in der ein elektrisch zu öffnendes und zu schließendes Sperrventil 38, insbesondere ein Magnetventil, angeordnet ist, ist der Verbrennungsluft-Zuführstutzen 34 an ein elektrisch angetriebenes Gebläse 40 angeschlossen.

Stromabseitig, also rechts in Fig. 1 ist am Ende des zweiten Brennkammerabschnitts 18 ein Abschlußelement in Form einer relativ dicken Platte 42 vorgesehen. Die Platte 42 weist eine zentrale Durchströmöffnung 44 auf, deren Durchmesser annähernd so groß wie der rechte Enddurchmesser des zweiten Brennkammerabschnitts 18 ist. Abgesehen von einem ersten Bereich konstanten Durchmessers erweitert sich die Durchströmöffnung 44 fortschreitend von links nach rechts. Die Platte 42 ist an oder in dem Gehäuse 44 befestigt.

In der weiter vorn beschriebenen Brennstoffleitung 30 ist eine elektrisch betriebene Pumpe 46, vorzugsweise eine Dosierpumpe mit Antrieb durch einen im Feld einer Spule hin- und her beweglichen Schwinganker, angeordnet.

Ferner ist eine elektrische Steuereinheit 48 eingezeichnet. An die Steuereinheit 48 ist ein Temperaturfühler 50 in Form eines Thermoelements angeschlossen, das in dem Gehäuse 4 dicht vor der Stirnseite des Filters 2 angeordnet ist. Die Pumpe 46, das Gebläse 40, das Ventil 38 und die Glühkerze 28 sind ebenfalls an die Steuereinheit 48 angeschlossen. Schließlich ist an die Steuereinheit 48 ein im Raum 8 des Gehäuses 4 angeordneter Druckfühler 52 angeschlossen.

Wenn mittels des Druckfühlers 52 festgestellt wird, daß der mittlere Abgasdruck im Raum 8 einen vorbestimmten Grenzwert, der die vollständige oder nahezu vollständige Beladung des Filters 2 repräsentiert, überschreitet, wird durch die Steuereinheit 48 eine thermische Regenerierung des Filters 2 eingeleitet. Das Gebläse 40 wird gestartet und das Ventil 38 geöffnet. Die Brennstoffpumpe 46 wird gestartet. Über den Verbrennungsluft-Zuführstutzen 34 wird dem zweiten Brennkammerabschnitt 18 Verbrennungsluft in der beschriebenen Wirbelströmung zugeführt. Über das Röhrchen 32 gelangt ein Teil-Verbrennungsluftstrom in den Stutzen 24. An der zuvor über die Steuereinheit 48 eingeschalteten Glühwendel der Glühkerze 28 entzündet sich das in dem Stutzen 24 vorhandene Brennstoff-Luft-Gemisch. Wenn die von der Pumpe 46 geförderte Brennstoffmenge pro Zeiteinheit relativ gering ist, erfolgt die Verbrennung praktisch ausschließlich in dem ersten Brennkammerabschnitt 14. Mit zunehmender Brennstoffmenge pro Zeiteinheit wird zunehmend der zweite Brennkammerabschnitt 18 in die Verbrennung des Brennstoffs einbezogen, wo das Hauptangebot an Verbrennungsluft besteht. Die Führung der Verbrennungsluft in Form einer im wesentlichen schraubenlinienförmigen Rotationsströmung entlang der Innenseite der Wand des zweiten Brennkammerabschnitts 18 verhindert ein Verrußen des zweiten Brennkammerabschnitts 18. Der durch die Durchströmöffnung 44 tretende Abgasstrom weitet sich im Bereich der Platte 42 und in Fig. 1 rechts davon tellerförmig bzw. schüsselförmig auf, wobei insbesondere bei hoher Brennstoffmenge pro Zeiteinheit die Verbrennung auch noch im Raum 8 stattfindet. Die Eintritts-Stirnseite 6 des Filters 2 wird ziemlich gleichmäßig mit heißem Gas beaufschlagt. Wenn während der Regenerierung der Dieselmotor läuft, mischt sich das heiße Verbrennungsgas aus dem Brenner 12 mit dem Motorabgas aus der Leitung 10.

Die Steuereinheit 48 ist so ausgelegt, daß aufgrund der mittels des Temperaturfühlers 50 erfaßten Temperatur im Bereich dicht vor der Stirnseite 6 des Filters 2 die Fördermenge pro Zeiteinheit der Brennstoffpumpe 46 gesteuert wird. Diese Steuerung erfolgt so, daß am Filter 2 eine Temperatur der durchströmenden Gase eingehalten wird, die oberhalb der erforderlichen Mindest-Regenerierungstemperatur liegt, aber nicht unnötig hoch ist. Da sich bei zunehmender Brennstoffmenge eine höhere Wärmeleistung des Brenners 12 ergibt und damit - im wesentlichen konstante Zufuhr von Motorabgas durch die Leitung 10 vorausgesetzt - eine steigende Temperatur im Raum 8, die wiederum von dem Temperaturfühler 50 erfaßt wird, kann man auch von einer Regelung statt von einer Steuerung sprechen. Nach beendeter Regenerierung des Filters 2, festgestellt beispielsweise durch den Druckfühler 52 oder nach Maßgabe einer durch Versuche ermittelten, durchschnittlichen Regenerierungszeit, werden die Pumpe 46 und das Gebläse 40 abgeschaltet und wird das Ventil 38 geschlossen. Die Glühkerze 28 war bereits vorher abgeschaltet worden, sobald sich die Verbrennung in der Tandem-Brennkammer 14, 18 stabilisiert hatte. Während der Regenerierung wird die Förderleistung der Pumpe 46 fortlaufend so geregelt, daß die Temperatur am Temperaturfühler 50 innerhalb eines vorbestimmten, relativ engen Temperaturbereichs ist von z.B. 650 bis 700°C ist.

Da der Brenneraustritt relativ dicht an dem Filter 2 sitzt, sind die Regelungstotzeiten kurz. In der Regel wird die beschriebene Regelung die Wärmeleistung des Brenners 12 am Anfang einer Regenerationsphase relativ hoch einstellen, so daß der Brenner selbst, die Platte 42, das Gehäuse 4 und der Filter 2 rasch auf die erforderliche Temperatur kommen. Danach wird die Regelung in der Regel die Förderleistung der Pumpe 46 zurücknehmen können. Ansonsten hängt die Regelung im wesentlichen von der Menge und der Temperatur des in den Raum 8 strömenden Motorabgases ab. Bei relativ kaltem Motorabgas (relativ niedriger Lastzustand des Dieselmotors) ist eine hohe Wärmeleistung des Brenners 12 erforderlich, bei hoher Motorabgastemperatur (hoher Lastzustand des Dieselmotors) ist tendenziell eine geringere Wärmeleistung des Brenners 12 erforderlich, wobei die Motorabgasmenge pro Zeiteinheit ein weiterer Einflußfaktor ist. Bei relativ geringer erforderlicher Wärmeleistung des Brenners 12 steht insbesondere in dem zweiten Brennkammerabschnitt 18 genügend Sauerstoff zur vollständigen Verbrennung des zugeführten Brennstoffs zur Verfügung. Bei hoher erforderlicher Wärmeleistung des Brenners 12, wenn man möglicherweise in den Bereich des Luftmangels in dem zweiten Brennkammerabschnitt 18 kommt, findet die abschließende Verbrennung des Brennstoffs im Raum 8 statt. Gerade bei Teillastzuständen des Dieselmotors ist im Raum 8 noch ausreichend Restsauerstoff im Motorabgas enthalten.

Der Brenner 12 muß nicht koaxial mit dem Filter 2 ausgerichtet sein, sondern könnte beispielsweise auch rechtwinklig zur Längsachse 26 ausgerichtet an der Umfangswand des Gehäuses 4 angebracht sein.

Die Steuer- bzw. Regeleinheit 48 ist technisch so einfach aufgebaut, daß auf eine detailliertere Beschreibung hier verzichtet werden kann. Bei Kenntnis des geforderten und vorstehend beschriebenen Funktionsablaufs ist es einem Durchschnittsfachmann problemlos möglich, eine geeignete Steuereinheit zu erstellen.

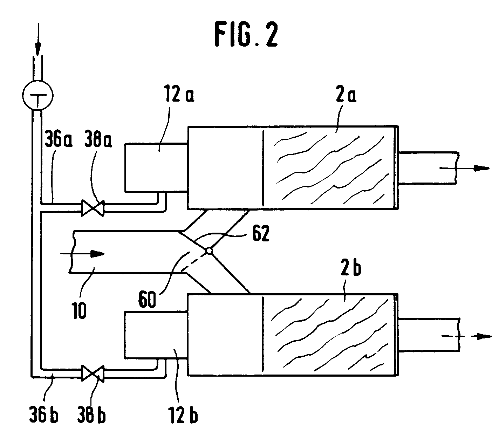

Fig. 2 soll eine zweiflutige Filter- und Regenerierungsanlage veranschaulichen, wobei aus dem Ausführungsbeispiel gemäß Fig. 1 wiederkehrende Details nicht gezeichnet sind und nicht nochmals beschrieben werden. Es sind zwei Filter 2a und 2b vorhanden. Die Motorabgasleitung 10 gabelt sich zu den beiden Filtern. An der Verzweigungsstelle 60 ist eine Klappe 62 vorgesehen, so daß entsprechend der jeweils herrschenden Klappenstellung das gesamte Motorabgas entweder zu dem ersten Filter 2a oder zu dem zweiten Filter 2b strömt. Jedem Filter ist ein eigener Brenner 12a bzw. 12b jeweils mit eigener Brennstoffpumpe zugeordnet, wobei die Brennerausbildung so ist, wie ausführlich im Zusammenhang mit Fig. 1 beschrieben. Allerdings ist für die beiden Brenner 12a und 12b ein gemeinsames Gebläse 40 vorgesehen, wobei in jeder der beiden zu den Brennern 12a und 12b führenden Verbrennungsluft-Leitungen 36a und 36b ein eigenes Ventil 38a bzw. 38b sitzt, so daß das Gebläse 40 wahlweise den ersten Brenner 12a oder den zweiten Brenner 12b versorgt. Für beide Brenner 12a und 12b kann eine gemeinsame, nicht eingezeichnete Steuereinheit vorgesehen sein. Es versteht sich, daß für jeden der beiden Filter 2a und 2b Temperaturfühler 50 und gegebenenfalls ein Druckfühler 52 vorgesehen ist.

Bei einer zweiflutigen Ausführungsform gemäß Fig. 2 kann jeweils ein Filter 2a bzw. 2b regeneriert werden, während das Motorabgas durch den gerade nicht regenerierten Filter strömt. Dies bringt den erheblichen Vorteil mit sich, daß während der Regenerierung nicht der gesamte Motorabgasstrom mit auf die Regenierungstemperatur aufgeheizt werden muß.

## Patentansprüche

1. Vorrichtung zum Entfernen von Partikeln aus Dieselmotorabgas, aufweisend:
(a) ein Gehäuse (4), in das eine von dem Dieselmotor kommende Abgasleitung (10) seitlich einmündet und in dem ein Partikelfilter (2) angeordnet ist, der bei seinem Betrieb von Motorabgas durchströmt wird;
(b) einen eine Brennkammer aufweisenden Brenner (12) für Flüssigbrennstoff, der dem Filter (2) derart zugeordnet ist, daß beim Betrieb des Brenners (12) dessen heiße Verbrennungsgase den Filter (2) durchströmen zum Abbrennen von ausgefilterten Partikeln;
(c) ein Gebläse (40) zum Zuführen von Verbrennungsluft zu dem Brenner (12);
(d) einen stromaufseitigen, ersten Brennkammerabschnitt (14) mit einem Stutzen (24), in dem eine elektrische Zündeinrichtung (28) angeordnet ist und der mit Öffnungen zum Zuführen des Brennstoffs sowie eines Teil-Verbrennungsluftstroms versehen ist;
(e) und einen stromabseitigen, zweiten Brennkammerabschnitt (18) mit einem Verbrennungsluft-Zuführstutzen (34), der an seiner Einmündung eine Ausrichtung mit Umfangskomponente hat,
**dadurch gekennzeichnet**,
(f) daß eine Pumpe (46) zum Zuführen des Brennstoffs zu dem Brenner (12) vorgesehen ist;
(g) daß ein in einem großen Bereich des Brennstoff/Luftverhältnisses betreibbarer und allein durch Regelung der Brennstoffzufuhr in einem großen Bereich leistungsregelbarer Brenner (12) vorgesehen ist,
(h) daß ein Temperaturfühler (50) im Bereich des Filters (2) zur Erfassung des Temperaturzustandes des Filters (2) vorgesehen ist;
(i) daß eine elektrische Steuerung (48) vorgesehen ist, an die der Temperaturfühler (50) und die Brennstoffpumpe (46) des Brenners (12) angeschlossen sind, wobei die Steuerung (48) so ausgelegt ist, daß in Abhängigkeit von dem erfaßten Temperaturzustand dem Brenner (12) eine derartige Brennstoffmenge zugeführt wird, daß am Filter (2) eine für das Abbrennen der ausgefilterten Partikel günstige Temperatur herrscht,
(k) daß zwischen dem ersten und dem zweiten Brennkammerabschnitt (14,18) ein Unterteilungselement (20) mit mindestens einer Durchströmöffnung (22) vorgesehen ist;
(l) daß am stromabseitigen Ende des zweiten Brennkammerabschnitts (18) ein Abschlußelement (42) mit mindestens einer Durchströmöffnung (44) vorgesehen ist;
(m) daß das Abschlußelement (42) des zweiten Brennkammerabschnitts (18) eine stirnseitige Abschlußwand des Partikelfiltergehäuses (4) bildet;
(n) und daß die Abgasleitung (10) seitlich in einen Raum (8) in dem Gehäuse (4) zwischen dem Abschlußelement (42) und dem Partikelfilter (2) einmündet.

2. Vorrichtung nach Anspruch 1,
dadurch gekennzeichnet,
daß sich die Durchströmöffnung (44) in Stromabwärtsrichtung erweitert zum Aufweiten des hindurchströmenden Gasstromes.

3. Vorrichtung nach einem der Ansprüche 1 bis 2,
dadurch gekennzeichnet,
daß der Stutzen (24) des ersten Brennkammerabschnitts (14) über eine Leitung (32) für den Teil-Verbrennungsluftstrom mit dem zweiten Brennkammerabschnitt (18) oder dessen Verbrennungsluft-Zuführstutzen (34) verbunden ist.

4. Vorrichtung nach einem der Ansprüche 1 bis 3,
dadurch gekennzeichnet,
daß in einer Verbrennungsluft-Leitung (36) zwischen dem Verbrennungsluft-Gebläse (40) und dem Brenner (12) ein elektrisch betätigbares Sperrventil (38) vorgesehen ist.

5. Vorrichtung nach einem der Ansprüche 1 bis 4,
gekennzeichent durch
eine Vollstrom-Regenerierungsausbildung, bei der während der brennerunterstützten Filterregenerierungsphasen die Verbrennungsgase des Brenners (12) das Motorabgas auf die Regenerierungstemperatur aufheizen.

6. Vorrichtung nach einem der Ansprüche 1 bis 4,
gekennzeichnet durch
eine zweiflutige Intervall-Regenerierungsausbildung, bei der zwei parallelgeschaltete Filter (2a,2b) und eine Klappe (62) zum wahlweisen Leiten des Motorabgases in den ersten oder den zweiten Filter vorgesehen sind, und bei der für jeden Filter (2a,2b) ein eigener Brenner (12a,12b) vorgesehen ist.

## Claims

1. Device for removing particles from diesel engine exhaust gas, comprising:
(a) a housing (4) into which an exhaust gas pipe (10) coming from the diesel engine opens laterally and in which there is arranged a particle filter (2) permeated, during operation thereof, by engine exhaust gas;
(b) a burner (12) for liquid fuel which comprises a combustion chamber and is connected to the filter (2) in such a way that, during operation of the burner (12), its hot combustion gases permeate the filter (2) in order to burn off filtered-out particles;
(c) a fan (40) for supplying air for combustion to the burner (12);
(d) an upstream first combustion chamber portion (14) with a nozzle (24) in which an electric ignition system (28) is arranged and which is provided with apertures for the supply of fuel and of a partial stream of air for combustion;
(e) a downstream second combustion chamber portion (18) with an air-for-combustion supply nozzle (34) having an orientation with a peripheral component at its orifice,
characterized in that
(f) a pump (46) is provided for supplying the fuel to the burner (12);
(g) a burner (12) which is operable in a large range of the fuel/air ratio and is adjustable in power over a large range merely by adjusting the fuel supply is provided;
(h) a temperature probe (50) is provided in the region of the filter (2) for detecting the temperature state of the filter (2);
(i) an electric controller (48) is provided to which the temperature probe (50) and the fuel pump (46) of the burner (12) are connected, the controller (48) being designed in such a way that, depending on the detected temperature state, the burner (12) is supplied with a quantity of fuel which is such that a temperature desirable for burning off the filtered-out particles prevails at the filter (2);
(k) a partition element (20) with at least one through-aperture (22) is provided between the first and the second combustion chamber portion (14, 18);
(l) a closure element (42) with at least one through-aperture (44) is provided at the downstream end of the second combustion chamber portion (18);
(m) the closure element (42) of the second combustion chamber portion (18) forms a terminal closure wall of the particle filter housing (4);
(n) and the exhaust gas pipe (10) opens laterally into a space (8) in the housing (4) between the closure element (42) and the particle filter (2).

2. Device according to claim 1, characterized in that the through-aperture (44) widens in the downstream direction to expand the permeating gas stream.

3. Device according to one of claims 1 to 2, characterized in that the nozzle (24) of the first combustion chamber portion (14) is connected via a pipe (32) for the partial stream of air for combustion to the second combustion chamber portion (18) or its air-for-combustion supply nozzle (34).

4. Device according to one of claims 1 to 3, characterized in that an electrically actuable non-return valve (38) is provided in an air-for-combustion pipe (36) between the air-for-combustion fan (40) and the burner (12).

5. Device according to one of claims 1 to 4, characterized by a full stream regenerator in which the combustion gases of the burner (12) heat up the engine exhaust gas to the regeneration temperature during the burner-assisted filter regeneration phases.

6. Device according to one of claims 1 to 4, characterized by a double-flow interval regenerator in which two filters (2a, 2b) connected in parallel and a flap (62) are provided for selective conveyance of the engine exhaust gas into the first or the second filter and in which an individual burner (12a, 12b) is provided for each filter (2a, 2b).

## Revendications

1. Dispositif pour éliminer des particules des gaz d'échappement de moteurs diesel, présentant :
(a) un carter (4), dans lequel débouche latéralement une conduite d'échappement (10) provenant du moteur diesel et dans lequel est disposé un filtre de particules (2) qui, en service, est traversé par les gaz d'échappement du moteur ;
(b) un brûleur (12) de combustible liquide présentant une chambre de combustion, qui est associé au filtre (2) de telle sorte que, lors du fonctionnement du brûleur (12), ses gaz de combustion chauds traversent le filtre (2) pour brûler les particules extraites par filtration ;
(c) une soufflante (40) pour alimenter le brûleur (12) en air de combustion ;
(d) une première partie (14) de chambre de combustion, du côté du flux entrant, avec une tubulure (24) dans laquelle est disposé un dispositif d'allumage électrique (28) et qui est pourvue d'ouvertures pour l'entrée du combustible ainsi que d'un flux partiel d'air de combustion ;
(e) et une seconde partie (18) de chambre de combustion, du côté du flux sortant, avec une tubulure d'alimentation d'air de combustion (34) qui possède à son débouché une orientation à composante périphérique,
**caractérisé**
(f) en ce qu'une pompe (46) est prévue pour l'alimentation en combustible du brûleur (12) ;
(g) en ce qu'est prévu un brûleur (12) exploitable dans une grande plage du rapport combustible/air et dont la puissance peut être réglée dans une grande plage par la seule régulation de l'apport de combustible,
(h) en ce qu'un palpeur de température (50) est prévu dans la région du filtre (2) pour détecter l'état de température du filtre (2) ;
(i) en ce qu'est prévue une unité de commande électrique (48) à laquelle sont raccordés le palpeur de température (50) et la pompe de combustible (46) du brûleur (12), l'unité de commande (48) étant conçue de telle sorte qu'en fonction de l'état de température détecté, on apporte au brûleur (12) une quantité de combustible telle que règne au niveau du filtre (2) une température favorable pour la combustion des particules extraites par filtration,
(k) en ce qu'un élément de division (20), pourvu d'au moins une ouverture de passage (22), est prévu entre la première partie (14) et la seconde partie (18) de la chambre de combustion ;
(l) en ce qu'un élément de terminaison (42), pourvu d'au moins une ouverture de passage (44), est prévu à l'extrémité aval de la seconde partie (18) de chambre de combustion ;
(m) en ce que l'élément de terminaison (42) de la seconde partie (18) de chambre de combustion constitue une paroi de terminaison frontale du carter (4) du filtre de particules ;
(n) et en ce que la conduite d'échappement (10) débouche latéralement dans une chambre (8) formée dans le carter (4) entre l'élément de terminaison (42) et le filtre de particules (2).

2. Dispositif selon la revendication 1, **caractérisé** en ce que l'ouverture de passage (44) s'élargit en direction aval afin d'élargir le flux de gaz traversant.

3. Dispositif selon la revendication 1 ou 2, **caractérisé** en ce que la tubulure (24) de la première partie (14) de chambre de combustion est reliée par l'intermédiaire d'une conduite (32) pour le flux partiel d'air de combustion à la seconde partie (18) de chambre de combustion ou à sa tubulure d'alimentation d'air de combustion (34).

4. Dispositif selon l'une des revendications 1 à 3, **caractérisé** en ce qu'une soupape d'isolement (38) à actionnement électrique est prévue dans une conduite d'air de combustion (36) entre la soufflante d'air de combustion (40) et le brûleur (12).

5. Dispositif selon l'une des revendications 1 à 4, **caractérisé** par un type de régénération à flux total selon lequel, pendant les phases de régénération du filtre assistées par brûleur, les gaz de combustion du brûleur (12) réchauffent les gaz d'échappement du moteur à la température de régénération.

6. Dispositif selon l'une des revendications 1 à 4, **caractérisé** par un type de régénération périodique à deux flux, qui prévoit deux filtres (2a, 2b) montés en parallèle et un clapet (62) pour diriger sélectivement les gaz d'échappement du moteur dans le premier ou le second filtre, et qui prévoit un propre brûleur (12a, 12b) pour chaque filtre (2a, 2b).
